# EUROPEAN PATENT SPECIFICATION

(11) **EP 3 971 144 B1**
(45) Date of publication and mention of the grant of the patent: **28.01.2026**
(21) Application number: 21197957.0
(22) Date of filing: 21.09.2021
(51) Int. Cl.: C02F 3/12, C02F 3/30, C02F 3/00

(54) **BIOMASS SELECTION AND CONTROL FOR CONTINUOUS FLOW GRANULAR/FLOCCULENT ACTIVATED SLUDGE PROCESSES**
BIOMASSEAUSWAHL UND -STEUERUNG FÜR PROZESSE MIT KONTINUIERLICHEM STROM FÜR KÖRNIGEN/FLOCKIGEN AKTIVSCHLAMM
SÉLECTION ET COMMANDE DE BIOMASSE POUR DES PROCÉDÉS DE BOUES ACTIVÉES GRANULAIRES /FLOCULANTES À ÉCOULEMENT CONTINU

(30) Priority: 21.09.2020 US 202017027528
(43) Date of publication of application: 23.03.2022
(73) Proprietor: Ovivo Inc., Montreal, QC H3A 2R7 (CA)
(72) Inventor: TRIVEDI, Hiren, Cedar Park, TX 78613 (US); VORWALLER, John, Salt Lake City, UT 84109 (US); BEAMAN, Tyson, Murray, UT 84123 (US); BAKER, Sophia, Ogden, UT 84405 (US); PINO-JELCIC, Sergio, Salt Lake City, UT 84018 (US); STENSEL, David, Mercer Island, WA 98040 (US)
(74) Representative: Murgitroyd & Company

(56) References cited:
- WO-A1-2013/151434
- WO-A1-2014/047459
- WO-A1-2016/004082
- WO-A1-2017/025345
- WO-A1-2017/218239
- WO-A1-2020/036832
- US-B1- 6 712 970

## Description

### Field

The present invention relates to a wastewater treatment system for biological nutrient removal.

### Background of the Invention

WO 2020/036832 discloses a continuous flow granular/flocculent sludge wastewater process selecting for granule biomass capable of nitrogen and phosphorus removal and controlling granule size and concentration of granular and flocculent sludge for optimal nutrient, organic, and solids removal. The process includes anaerobic, anoxic, and aerobic process zones, a high soluble biodegradable chemical oxygen demand (bCOD) loaded first reactor in anaerobic or anoxic zones, a granular sludge classifier with recycle of underflow granular sludge to the first reactor, a secondary clarifier to settle flocculent sludge and particulates and recycle of flocculent sludge from the secondary clarifier underflow to an aerobic process zone. Wasting of sludge from the two separate recycle lines controls the bioprocess flocculent and granular sludge concentrations and solids retention times. Bypass around and recycle flow to the classifier to maintain desired flow under various influent flow conditions aid control of granule size. On/off mixer operation of anaerobic and anoxic reactors may be used. WO2017/025345 provides a system for treating wastewater involving different treatment zones and selection of granular sludge.

### Summary of the Invention

According to the present invention, there is provided a wastewater treatment system including a series of biological process zones and a downstream clarifier according to claim 1.In one particular embodiment of the invention a sidestream takes a portion of sludge from an aerobic zone of the system, the sidestream including a classifier or separator for producing an effluent with an increased concentration of granular biomass. Another effluent of this separator is rich in floc, and much of this is wasted. The granule-rich sludge goes to a clarifier, which may include a second separator within the clarifier, for further concentration of granules.

The anaerobic process zone preferably has multiple stages and is configured and operated to encourage solution growth of granular biomass in subsequent process zones.

### Description of the Drawings

Fig. 1 shows schematic of a variation of the process for nitrogen removal with anaerobic granule selector zone.
Fig. 2 shows schematic of a process for production of granular sludge in sidestream treatment for feeding granules to the main wastewater treatment process.
Fig. 3 is a schematic diagram showing a particular embodiment with a sidestream separator, which may be in addition to a separator in the clarifier.
Fig. 4 is an elevational section view showing a multiple-stage anaerobic zone for the system of the invention, to encourage selective growth of granular sludge.

### Description of Preferred Embodiments

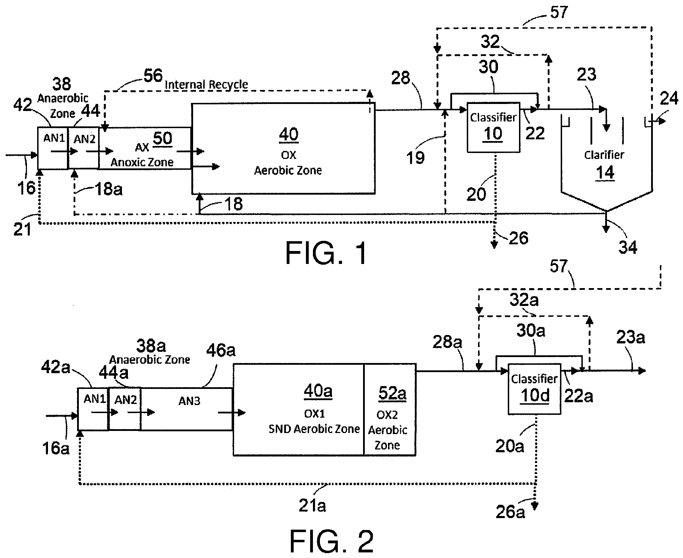

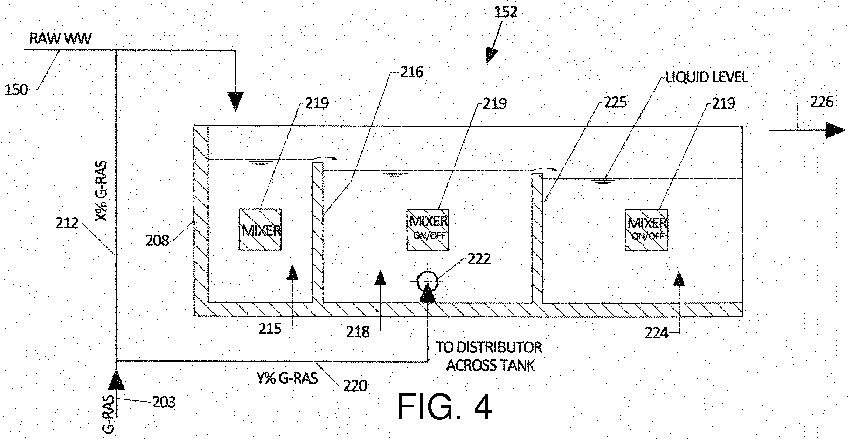

Figure 1 shows a modification to Figure 5C of WO2020/036832 for applications for which nitrogen removal and not phosphorus is required. An anaerobic high loaded first reactor is used to select for PAO granules. Mixed liquor flows from anaerobic reactor 44 to an anoxic zone 50 that may be single or multiple stages. The PAO granules from reactor 44 use stored carbon obtain in reactors 42 and 44 for denitrification in zone 50. Figure 1 also shows a clarified effluent recycle line 57 for dilution of the influent to the classifier/separator 10, to achieve optimum dilution for separation of granules, as needed. This is an option for all of Figures 4 to 5C, and even for Figure 5D of WO2020/036832, discussed below, in which clarified effluent from the main process can be cycled to the separator for dilution. Other sources of clarified liquid or water could also be used for this purpose. See dilution line 57 in Figure 2.

Figure 2 is used for growth of granules to add to the main treatment system and does not itself have a final secondary clarifier as in Figure 5A of WO2020/036832. The system is a sidestream incubator for granular sludge. The first high loaded anaerobic reactor 42a is fed line 16a which may be, for example, a reject liquid from digestion dewatering or a small portion of the influent wastewater flow, or another wastewater stream, MLSS from one of the main process zones, or even industrial wastewater, with addition of other organics if necessary. The process selects for PAO granules that are fed via line 26a to a liquid treatment system producing the treated effluent for the wastewater treatment plant, e.g. to the main process systems of Figures 4 and 5A to 5C of WO2020/036832, preferably to an anaerobic zone as at the line 21 in Figures 4 to 5C of WO2020/036832.

Effluent from the anaerobic zone is preferably fed to a short-SRT aerobic zone 52a but could also be fed first to an SND aerobic zone 40a followed by a longer-SRT aerobic zone 52a. The classifier overflow final effluent line 23a is also fed to the main liquid treatment system, preferably to an aerobic or anoxic zone. Treatment of influent flow 16a follows the same course as for the system in Figure 5A of WO2020/036832 to produce PAO granules. Recycle of underflow from the classifier or separator 10d in Figure 2 is directed to reactor 42a operated at a high soluble bCOD load.

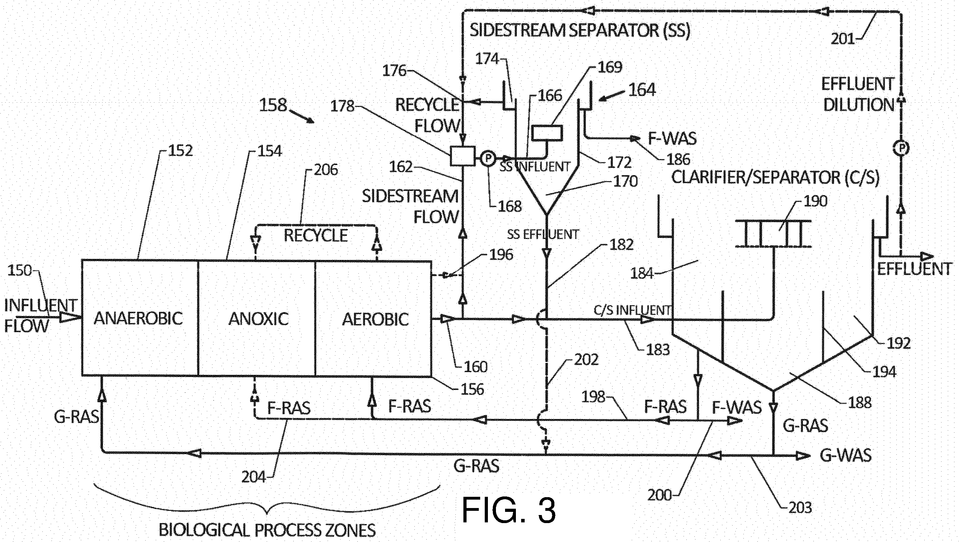

Figure 3 is a schematic diagram showing a wastewater treatment system of the invention including a classifier or separator for enhancing granular sludge content. In this case the system, the liquid side of a treatment system as shown, includes an influent flow 150 into a series of biological treatment zones, in this case shown as an anaerobic zone 152, an anoxic zone 154 and an aerobic treatment zone 156. The anoxic zone 154 could be a "swing" zone by having aeration at a controlled rate to have simultaneous nitrification/denitrification, and the two zones 154 and 156 could be a single anoxic/oxic "swing" zone. Note that each of the process zones may contain one or more tanks in series.

The system shown in Figure 3 includes a sidestream generally identified as 158, receiving a flow from the zone 156, i.e. from the aerobic or anoxic/oxic zone. Effluent from the zone 156, indicated at 160, is divided such that a selected portion of this flow goes into the sidestream, at 162. A sidestream separator or classifier, for granule/floc separation, is indicated at 164, and the sidestream flow is directed into the separator via a flow line 166. A pump 168 may be provided for this purpose, although in some cases the flow to the separator 164 could be by gravity. The influent to the separator 164 is via an EDI 169, which can be configured as in some of the previously described embodiments, such that granular sludge is encouraged into a bottom region 170 of the separator vessel 172, while primarily floc sludge is collected at an upper end, indicated as overflowing into a floc collection launder at 174.

The drawing also shows an internal recycle flow at 176, from the primarily floc collection launder 174, dropping by gravity. This recycle flow 176 joins with the incoming sidestream feed flow 162 at a collection box 178. The pump 168 preferably is adjustable, and is set to maintain a prescribed flow rate, with recycle 176 and incoming feed flow 162, through the separator 164 for desired flow velocities in the separator to encourage separation of granular sludge from floc sludge. In conditions where sidestream flow 162 is minimal, volumetric flow into the separator should be kept substantially constant, thus the internal recycle flow loop 176. If conditions are such that the liquid level in the collection box 178 becomes too low as determined by a sensor, the pump can be automatically shut off.

As indicated in the drawing, a first effluent of the sidestream separator, indicated as "SS effluent" in the drawing, at 182, is enhanced in granular concentration and preferably is rejoined with the main flow 160, to be introduced as a combined flow 183 into a clarifier 184. A second effluent of the separator 164 preferably comes from the upper end of the separator, in the same manner as the recycle flow 176, and comprises primarily floc sludge. This is indicated as a wasted stream 186 in the drawing, "F-WAS".

In one implementation of the invention, the combined flow 183 of granular-rich sludge and effluent sludge from the process zone 156 can be delivered into the illustrated clarifier 184 in a conventional manner, typically through an energy dissipating inlet (EDI). The sludge to be settled in the clarifier will be enhanced in granular content, and since granular sludge settles at a faster rate than floc, the central bottom 188 of the clarifier will tend to concentrate the granular sludge. However, in the illustrated embodiment the clarifier's EDI 190 is a special separator EDI, i.e. a further separator that works in conjunction with the geometry of the clarifier to concentrate granular sludge even further. For example, the EDI can be similar to the separators shown in Figures 11A and 11B of WO2020/036832, or the clarifier/separator combination can be essentially as shown in Figures 8A and 8B of WO2020/036832.

In any event, the EDI/separator 190 tends to separate granular from floc sludge, depositing granular sludge downward essentially centrally in the clarifier, while floc sludge tends to drift outwardly and to be collected as primarily granular sludge in an outer annular region 192 of the clarifier. The clarifier can include a dividing ring 194 to mostly separate primarily floc sludge into the outer region 192, while primarily granular sludge drops to central bottom region 188.

In Figure 3 a dashed line 196 is shown for withdrawal of MLSS from a desired level directly from the aerobic process zone 156.

Figure 3 shows a recycle line 198 (F-RAS) from the primarily floc-settling region 192 of the clarifier to the process zone 156, which may be an aerobic zone. Also, from this line 198 is shown an effluent line 200 (F-WAS) for wasting a portion of the recycle sludge from the clarifier.

The drawing shows a secondary effluent dashed line 201 which may be included from the clarifier's outflow launder back to the sidestream, entering the recycle flow at 176. This is to dilute the sidestream separator feed to provide better separation characteristics. Note that such a dilution line can also be included in the systems described above in Figures 1 and 2, to dilute the flow to the separator when needed for optimal granular separation. In all cases, the dilution water could come from another source of clarified water if desired.

It is also possible that the internal recycle of the sidestream could be eliminated in some treatment plants or daily flow conditions. The dilution stream 201 from the clarifier, and/or an increase in the rate of flow from the aerobic zone 156, can be used to increase flow through the sidestream separator 164 as needed to maintain a minimum flow therethrough.

Still further, a dashed line 202 is indicated from the SS effluent line 182, i.e. granular-enriched sludge from the sidestream separator 164. Since the sidestream includes a granular/floc separator, the primarily granular portion can be sent directly back to the anaerobic zone 152, without first going to the clarifier 184. If desired the flow could be divided, according to conditions, to direct a portion of the SS effluent 182 to the clarifier and another portion via the line 202 directly to the anaerobic zone 152 via G-RAS line 203.

Another optional recycle line is shown at 204, indicating that primarily floc recycle sludge in the F-RAS line 198 can be recycled to the anoxic zone (or anoxic/oxic zone) 154, rather than (or in addition to) recycling to the aerobic zone 156. Another dashed line 206 shows a preferred recycle of a portion of the sludge in the aerobic zone back to the anoxic or swing zone 154.

The granular separation system described achieves several advantages. First, it provides two stages of granule/floc separation, so that a better concentration of granular sludge can help all sludge settle more quickly in the clarifier and a higher concentration of granular sludge can be realized at the bottom of the clarifier, at 188. Second, by having a sidestream separator 164, the system provides an early opportunity to collect very light floc and to discharge a desired portion of that floc, as at 186, rather than allowing the lightweight, fluffy material to hinder settling of sludge in the clarifier. Third, the sidestream allows for adjustment of conditions of the incoming mixed liquor for initial startup of the granular/floc separator, which can require dilution to achieve optimum conditions for separation. Fourth, the sidestream provides for the possibility of operation for different conditions and solids retention times for the AGS and floc. The portion of the effluent flow from the aerobic zone 156 to be sent through the sidestream can be adjusted. To avoid significant variations in flow through the separator 164, the pump 168 maintains essentially consistent flow, increasing the internal sidestream recycle to balance lower flow from the line 160 to assure a prescribed range of flow through the separator.

Another aspect of the invention focuses on the anaerobic process zone 152, i.e. the zone which first receives the influent flow 150. See Figure 4. Pursuant to the invention the anaerobic zone is a multi-stage zone configured to provide an environment to encourage the growth of granules, in further zones downstream. The multi-stage anaerobic zone 152 is designed to create intimate contact of the food-bearing incoming wastewater with the recycled activated sludge entering the anaerobic zone (G-RAS as in Figure 3), with its granular sludge, and with granular biomass already present in the first anaerobic zone. The influent 150 is rich in readily biodegradable soluble food for the microbes, while the RAS is rich in microbes, as well as in granular biomass. The anaerobic tank and its inflows are configured to encourage further granule growth of sufficient size to provide good separation of granules in the separators downstream. The design encourages a high soluble volumetric BOD loading and also a high food-to-mass (F/M) ratio (mass of BOD applied/mass of MLVSS-day, i.e. mixed liquor volatile suspended solids-day), particularly at the influent end of the zone.

One preferred implementation is shown in Figure 4. In this embodiment, the anaerobic tank 152 is divided into multiple stages, at least two, with Figure 4 showing three. Incoming wastewater, which may be raw wastewater, is indicated at the left side of the drawing, at 150, and this is combined with a portion of the G-RAS recycle flow 203 (see Figure 3). The influent wastewater (line 150) and RAS recycle (line 212) are thoroughly mixed for intimate contact before entry to the stage 215, which would occur in a pipe or a mixing box upstream of or within the anaerobic zone. The RAS portion indicated as 212 in the drawing is a preselected portion of the total RAS flow 203 as further discussed below. Note that the G-RAS in the recycle line 203 could have been treated in a nitrate removal tank (not shown) prior to reaching the anaerobic zone 152.

The influent wastewater and the RAS portion flow into the first stage 215 of the anaerobic zone, which is a small AGS feed stage with retention time preferably 30 minutes or less, possibly only about 15 minutes. From that stage the mixed liquor moves to a second anaerobic zone stage 213, which is shown as by flowing over a weir or baffle 216, although movement to the stage 218 could be other than over a weir.

Mixers 219 in the anaerobic stages allow mixing of the feed with the tank contents for further consumption of readily available soluble food and conversion of colloidal and particulate food to a soluble form for consumption by the microbes.

As noted above, only a selected portion of the RAS is introduced along with the incoming wastewater, at 212/150. The remainder of the RAS portion passes through a line 220, to be introduced into the second stage as illustrated. This is preferably via an appropriate form of distributer, e.g. a horizontal pipe 222 with multiple openings to evenly distribute the RAS across the bottom width of the tank. With a portion of the RAS introduced farther downstream than the influent, the proportions of RAS at 212 and 220 can be adjusted so as to achieve a high F/M ratio, particularly in the first stage 215. In a preferred embodiment the F/M ratio is at least 5 in that first stage 215. This might be achieved using a recycle split with, for example, about 25% to 40% (this could range from 10% to 50%) of the RAS introduced with the influent via the line 212 as a function of the influent wastewater conditions. As note above, the retention time in the first stage is short, no more than 30 minutes.

A third stage 224 is shown in the anaerobic zone in the illustrated embodiment, entering past a divider 225 which can be a weir as shown. An arrow 226 indicates exit flow of MLSS from the third stage 224 and from the anaerobic zone. It should be understood that further anaerobic zones or stages could be included downstream of that shown. Mixers 219 preferably are provided in each stage. In the second and third stages the mixers are turned off periodically. Flow continues through the stages whether the mixers are on or off. In the first stage 215 it is important that all the microbes are in contact for consumption of influent soluble good food at highest F/M ratio, and the mixer need not be shut off. In the second and third stages 218 and 224, mixers are turned off for a selected period of time, greater than one hour, at desired intervals. When the mixer is off heavier solids including granular sludge and unbiodegradable particulate food settle to the bottom of the tank, while the flow in and out of the tank continues to carry lighter solids and smaller granules to the next tank. The solids that settle provide time for intimate contact between the faster settling granular sludge and biodegradable particulate solids.

Under that condition the biodegradable solids from the influent are hydrolyzed, and the hydrolyzed products are fermented to provide additional sbCOD for the granules. During this time the granules are consuming the sbCOD at a deeper biofilm depth and have less competition for the food from flocculent sludge.

The consumed sbCOD (soluble biodegradable COD) in the anaerobic zone is stored as polyhydroxyalkanoates (PHAs) by the bacteria in the granules. During the subsequent mixing period these granules move to the downstream anoxic and aerobic zones where the PHAs are oxidized to result in the growth of new granules to increase the granular sludge biomass content.

Larger granules in a granular/floc activated sludge system have higher settling velocities and thus may be more easily separated from the floc. The size of the granule can be affected by the bulk liquid soluble biodegradable COD (sbCOD) concentration in the anaerobic zone where the influent wastewater and return activated sludge containing granules are first in contact. A higher bulk liquid COD concentration results in a greater diffusion depth for sbCOD into the granule biofilm and thus provides for growth at deeper depths leading to a larger granule. The anaerobic zone in this innovative process design achieves providing a higher sbCOD concentration for granular growth using two features in the first anaerobic stage in the anaerobic zone: 1) a relatively small initial volume in stage 1 to achieve a high soluble BOD loading in g/Ld or high F/M and 2) intimate contact between the granular sludge and particulate BOD during the mixer-off operation.
Terms used herein such as "about" or "generally" should be understood as meaning within 10% of the value stated.

## Claims

1. A wastewater treatment system including a series of biological process zones (152, 154, 156) and a clarifier (184) downstream of the process zones, and further comprising:
a sidestream flow (160, 162, 166, 164) from an aerobic process zone (156) of the series of process zones configured for receiving a selected portion of sludge exiting the aerobic process zone,
the sidestream flow (160, 162, 166, 164) including a sidestream separator (164) for separating granular sludge from floc sludge to produce, at least intermittently, a waste stream (186) from a first separator effluent (174) containing primarily floc sludge and to produce a second effluent (182) enhanced in granular content,
the sidestream separator (164) further including a recycle stream (176) configured for recycling the first separator effluent (174) back to the sidestream flow (166) into the sidestream separator (164), with a control (168) for controlling flow via the recycle stream (176), and
the system being configured to join the second effluent (182) from the sidestream separator (164) with a main flow (160)
from the aerobic process zone (156) to the clarifier (184), so that flow entering the clarifier (184) is a combined flow (183) of the second effluent (182) with flow from the aerobic process zone, and contains an enhanced proportion of granular sludge thus enhancing settling rate in the clarifier, tending to collect a granular-rich sludge in a bottom area (188) of the clarifier, whereby settling of sludge in the clarifier (184) is enhanced to increase clarifier efficiency, and
the system is configured to adjust the operation of the sidestream flow (160, 162, 166, 164) to enhance control of granular sludge and floc sludge content in the process stream.

2. The wastewater treatment system of claim 1, wherein the clarifier (184) is configured to create a floc-rich region (192) separated from the granular-rich sludge in the bottom area, and includes a recycle line (198) for providing floc sludge from the floc-rich region (192) of the clarifier to at least one of the process zones (152, 154, 156).

3. The wastewater treatment system of claim 2, wherein said one of the process zones (156) is said aerobic process zone or an anoxic process zone (154).

4. The wastewater treatment system of claim 2, including a recycle flow (G-RAS, 203) for providing granular-rich sludge from the bottom (188) of the clarifier to an anaerobic process zone (152) of the series of biological process zones, with a portion of the settled granular sludge from the clarifier (184) being wasted (G-WAS).

5. The wastewater treatment system of claim 1, wherein the clarifier (184) produces a clarified effluent (EFFLUENT), and the system includes a recycle line (201) carrying a portion of the clarified effluent to the sidestream separator (164) for dilution of the flow (166) into the separator.

6. The wastewater treatment system of claim 1, wherein the sidestream flow (162) from the aerobic process zone (156) is from above (196) the level of the main flow from the aerobic process zone to the clarifier.

7. The wastewater treatment system of claim 1, further including a recycle line (202, 203, G-RAS) for conducting the second effluent (182) to an anaerobic zone (152) of the series of process zones.

8. The wastewater treatment system of claim 4, wherein the clarifier (184) includes a second separator (190) positioned within the clarifier, and wherein the main flow (183) from the aerobic process zone (156) to the clarifier (184) is connected to flow to the second separator (190), to provide to the clarifier (184) downstream of the second separator (190) an enhanced proportion of granular sludge thus further enhancing settling rate in the clarifier (184), the second separator (190) being effective to further separate granular sludge from floc sludge such that granular sludge settles more rapidly to the bottom (188) of the clarifier (184), with primarily floc sludge from the second separator (190) being directed to an outward region (192) of the clarifier (184) so as to settle in an outer area (192) of floc sludge radially outward from settled granular sludge, the recycle line (198) providing floc sludge from the outer area (192) of the clarifier (184) to at least one of the process zones (152, 154, 156).

9. The wastewater treatment system of claim 1, acting as a mainstream process for removing nitrogen and/or phosphorus, and additionally including a second sidestream flow comprising a sidestream treatment incubator system for generating granular biomass (26a) for use in the mainstream process , comprising:
a biological sludge process stream with one or a succession of incubator process zones (38a, 40a, 52a), to remove nitrogen or nitrogen and phosphorus from activated sludge, with a continuous influent of solids processing reject water or influent wastewater (16a) into the incubator process zones, a first incubator zone (38a) of said incubator process zones being an anaerobic or anoxic zone,
an incubator separator (10d) receiving sludge flow from the biological sludge incubator process zone(s), with sludge (28a) flowing through the incubator separator, in which granular sludge is separated from floc sludge, with granular-rich sludge (20a) collected in a bottom area of the incubator separator (10d),
a majority of the granular-rich sludge in the incubator separator (10d) being recycled to the first incubator zone (38a) so as to feed the granular biomass with influent soluble bCOD, and a portion (26a) of the granular-rich sludge being directed to the mainstream process.

10. The wastewater treatment system of claim 9, wherein the incubator separator (10d) has a primarily floc sludge overflow (22a), separate from the granular-rich sludge, and including a flow path (23a) of the primarily floc sludge overflow to the mainstream process.

11. The wastewater treatment system of claim 10, wherein the flow path (23a) of primarily floc sludge overflow (22a) is directed to the clarifier (184) of the mainstream process.

12. The wastewater treatment system of claim 9, wherein said portion (26a) of the granular-rich sludge is directed to an anaerobic zone (152) of the series of biological process zones of the mainstream process.

13. The wastewater treatment system of claim 1, with continuous flow of wastewater through the series of biological process zones (152, 154, 156), a first of the biological process zones being an anaerobic zone (152) for encouraging selective growth of granular biomass, the anaerobic zone comprising:
at least two successive stages (215, 218, 224) in the anaerobic zone (152), including a first stage (215) and a second stage (218),
a continuous flow of influent wastewater (150) to the first stage (215) of the anaerobic zone,
a recycle (203, 212) into the continuous flow of influent wastewater, the recycle comprising a first portion of a recycled activated sludge, RAS, stream from the clarifier (184) to produce a continuous combined raw influent/RAS flow (150) into the first stage (215), the first stage providing for intimate contact between the incoming wastewater, rich in food, and the RAS, rich in biological activity, such that granular biomass present in the RAS is exposed to the food of the incoming wastewater for consumption and storage leading to growth of granules in further non-anaerobic zones,
a first mixer (219) in the first stage (218) to mix the RAS and incoming wastewater to provide a mixed liquor,
a continuous flow configured to convey the mixed liquor from the first stage (215) to the second stage (218),
a flow (220) configured to provide a second, remaining portion of the RAS into a bottom region of the second stage (218) to mix with the mixed liquor in the second stage,
a second mixer (219) capable of intermittent operation in the second stage such that mixing of the incoming RAS (220) and mixed liquor from the first stage (215) occurs intermittently whereby when the second mixer (219) is off heavier granular biomass tends to settle deeper than floc biomass in the second stage, so that said remaining portion (220) of RAS entering the second stage comes into intimate contact with the settled granular biomass and particulate biochemical oxygen demand, BOD.

14. The wastewater treatment system of claim 13, wherein the second stage (218) includes a distributor (222) introducing the second, remaining portion (220) of RAS into the second stage, to distribute the incoming RAS essentially uniformly across the width of the second stage and at said bottom region of the second stage.

15. The wastewater treatment system of claim 13, wherein the clarifier (184) is connected to the sidestream separator (164) such that the clarifier concentrates granular-rich sludge in a bottom area (188) of the clarifier, with at least a portion (203) of the granular rich sludge being directed back to the first stage (215) of the anaerobic zone (152) as said RAS.

## Patentansprüche

1. Ein Abwasserbehandlungssystem, das eine Reihe von biologischen Prozesszonen (152, 154, 156) und eine Kläreinheit (184) stromabwärts der Prozesszonen umfasst und ferner Folgendes beinhaltet:
einen Nebenstromfluss (160, 162, 166, 164) von einer aeroben Prozesszone (156) der Reihe von Prozesszonen, der konfiguriert ist, um einen ausgewählten Teil von Schlamm aufzunehmen, der aus der aeroben Prozesszone austritt,
wobei der Nebenstromfluss (160, 162, 166, 164) einen Nebenstromabscheider (164) zum Trennen von Granulatschlamm von Flockenschlamm umfasst, um mindestens intermittierend einen Entsorgungsstrom (186) von einem ersten Abscheiderablauf (174), der primär Flockenschlamm enthält, zu produzieren und um einen zweiten Ablauf (182) mit verbessertem Granulatgehalt zu produzieren,
wobei der Nebenstromabscheider (164) ferner einen Rückführstrom (176) umfasst, der konfiguriert ist, um den ersten Abscheiderablauf (174) zurück zu dem Nebenstromfluss (166) in den Nebenstromabscheider (164) zurückzuführen, mit einer Steuereinheit (168) zur Flusssteuerung mittels des Rückführstroms (176), und
wobei das System konfiguriert ist, um den zweiten Ablauf (182) von dem Nebenstromabscheider (164) mit einem Hauptfluss (160) von der aeroben Prozesszone (156) zu der Kläreinheit (184) zu vereinen, sodass ein Fluss, der in die Kläreinheit (184) eintritt, ein kombinierter Fluss (183) aus dem zweiten Ablauf (182) und einem Fluss von der aeroben Prozesszone ist und einen verbesserten Anteil von Granulatschlamm enthält, wodurch eine Absetzrate in der Kläreinheit verbessert wird, die dazu tendiert, einen granulatreichen Schlamm in einem Bodenbereich (188) der Kläreinheit zu sammeln, wobei das Absetzen von Schlamm in der Kläreinheit (184) verbessert wird, um eine Effizienz der Kläreinheit zu erhöhen, und
wobei das System konfiguriert ist, um den Betrieb des Nebenstromflusses (160, 162, 166, 164) anzupassen, um die Steuerung von Granulatschlamm- und Flockenschlammgehalt in dem Prozessstrom zu verbessern.

2. Abwasserbehandlungssystem gemäß Anspruch 1, wobei die Kläreinheit (184) konfiguriert ist, um eine flockenreiche Region (192) zu bilden, die von dem granulatreichen Schlamm in dem Bodenbereich getrennt ist, und eine Rückführleitung (198) umfasst, um mindestens einer der Prozesszonen (152, 154, 156) Flockenschlamm von der flockenreichen Region (192) der Kläreinheit bereitzustellen.

3. Abwasserbehandlungssystem gemäß Anspruch 2, wobei die eine der Prozesszonen (156) die aerobe Prozesszone oder eine anoxische Prozesszone (154) ist.

4. Abwasserbehandlungssystem gemäß Anspruch 2, das einen Rückführfluss (G-RAS, 203) umfasst, um einer anaeroben Prozesszone (152) der Reihe von biologischen Prozesszonen granulatreichen Schlamm von dem Boden (188) der Kläreinheit bereitzustellen, wobei ein Teil des abgesetzten Granulatschlamms von der Kläreinheit (184) entsorgt wird (G-WAS).

5. Abwasserbehandlungssystem gemäß Anspruch 1, wobei die Kläreinheit (184) einen geklärten Ablauf (ABLAUF) produziert und das System eine Rückführleitung (201) umfasst, die einen Teil des geklärten Ablaufs zu dem Nebenstromabscheider (164) trägt, um den Fluss (166) in den Abscheider zu verdünnen.

6. Abwasserbehandlungssystem gemäß Anspruch 1, wobei der Nebenstromfluss (162) von der aeroben Prozesszone (156) oberhalb (196) des Niveaus des Hauptflusses von der aeroben Prozesszone zu der Kläreinheit abgeht.

7. Abwasserbehandlungssystem gemäß Anspruch 1, das ferner eine Rückführleitung (202, 203, G-RAS) umfasst, um den zweiten Ablauf (182) zu einer anaeroben Zone (152) der Reihe von Prozesszonen zu führen.

8. Abwasserbehandlungssystem gemäß Anspruch 4, wobei die Kläreinheit (184) einen zweiten Abscheider (190) umfasst, der innerhalb der Kläreinheit positioniert ist, und wobei der Hauptfluss (183) von der aeroben Prozesszone (156) zu der Kläreinheit (184) so verbunden ist, dass er zu dem zweiten Abscheider (190) fließt, um der Kläreinheit (184) stromabwärts des zweiten Abscheiders (190) einen verbesserten Anteil an Granulatschlamm bereitzustellen, wodurch eine Absetzrate in der Kläreinheit (184) weiter verbessert wird, wobei der zweite Abscheider (190) dazu dient, Granulatschlamm noch weiter von Flockenschlamm abzuscheiden, sodass sich Granulatschlamm schneller an dem Boden (188) der Kläreinheit (184) absetzt, wobei primär Flockenschlamm von dem zweiten Abscheider (190) zu einer außenliegenden Region (192) der Kläreinheit (184) geleitet wird, um sich in einem äußeren Bereich (192) von Flockschlamm radial auswärts von abgesetztem Granulatschlamm abzusetzen, wobei die Rückführleitung (198) mindestens einer der Prozesszonen (152, 154, 156) Flockenschlamm von dem äußeren Bereich (192) der Kläreinheit (184) bereitstellt.

9. Abwasserbehandlungssystem gemäß Anspruch 1, das als ein Hauptstromprozess zur Entfernung von Stickstoff und/oder Phosphor fungiert und zusätzlich einen zweiten Nebenstromfluss umfasst, der ein Nebenstrombehandlungsinkubatorsystem zur Erzeugung von Granulatbiomasse (26a) zur Verwendung in dem Hauptstromprozess beinhaltet, beinhaltend:
einen biologischen Schlammprozessstrom mit einer oder einer Folge von Inkubatorprozesszonen (38a, 40a, 52a), um Stickstoff oder Stickstoff und Phosphor aus Belebtschlamm zu entfernen, mit einem kontinuierlichen Zulauf von Feststoffverarbeitungsrückstandswasser oder Zulaufentsorgungswasser (16a) in die Inkubatorprozesszonen, wobei eine erste Inkubatorzone (38a) der Inkubatorprozesszonen eine anaerobe oder anoxische Zone ist,
einen Inkubatorabscheider (10d), der einen Schlammfluss von der einen oder den mehreren biologischen Schlamminkubatorprozesszonen aufnimmt, wobei Schlamm (28a) durch den Inkubatorabscheider fließt, in welchem Granulatschlamm von Flockenschlamm abgeschieden wird, wobei granulatreicher Schlamm (20a) in einem Bodenbereich des Inkubatorabscheiders (10d) gesammelt wird,
wobei eine Mehrheit des granulatreichen Schlamms in dem Inkubatorabscheider (10d) zu der ersten Inkubatorzone (38a) zurückgeführt wird, um der Granulatbiomasse löslichen Zulauf-bCOD zuzuführen, und ein Teil (26a) des granulatreichen Schlamms zu dem Hauptstromprozess geleitet wird.

10. Abwasserbehandlungssystem gemäß Anspruch 9, wobei der Inkubatorabscheider (10d) einen Überlauf (22a) für primär Flockenschlamm aufweist, der von dem granulatreichen Schlamm getrennt ist, und einen Flussweg (23a) des Überlaufs für primär Flockenschlamm zu dem Hauptstromprozess umfasst.

11. Abwasserbehandlungssystem gemäß Anspruch 10, wobei der Flussweg (23a) des Überlaufs (22a) für primär Flockenschlamm zu der Kläreinheit (184) des Hauptstromprozesses geleitet wird.

12. Abwasserbehandlungssystem gemäß Anspruch 9, wobei der Teil (26a) des granulatreichen Schlamms zu einer anaeroben Zone (152) der Reihe von biologischen Prozesszonen des Hauptstromprozesses geleitet wird.

13. Abwasserbehandlungssystem gemäß Anspruch 1 mit einem kontinuierlichen Fluss von Abwasser durch die Reihe von biologischen Prozesszonen (152, 154, 156), wobei eine erste der biologischen Prozesszonen eine anaerobe Zone (152) zur Förderung eines selektiven Wachstums von Granulatbiomasse ist, wobei die anaerobe Zone Folgendes beinhaltet:
mindestens zwei aufeinanderfolgende Stufen (215, 218, 224) in der anaeroben Zone (152), die eine erste Stufe (215) und eine zweite Stufe (218) umfassen,
einen kontinuierlichen Fluss von Zulaufabwasser (150) in die erste Stufe (215) der anaeroben Zone,
eine Rückführung (203, 212) in den kontinuierlichen Fluss von Zulaufabwasser, wobei die Rückführung einen ersten Teil eines Stroms von rückgeführtem Belebtschlamm, RAS-Stroms, von der Kläreinheit (184) beinhaltet, um einen kontinuierlichen kombinierten Rohzulauf/RAS-Fluss (150) in die erste Stufe (215) zu produzieren, wobei die erste Stufe einen innigen Kontakt zwischen dem ankommenden Abwasser, das nahrungsreich ist, und dem RAS, der reich an biologischer Aktivität ist, bereitstellt, sodass Granulatbiomasse, die in dem RAS vorhanden ist, der Nahrung des ankommenden Abwassers zwecks Verbrauch und Einlagerung ausgesetzt wird, was zu einem Wachstum von Granulaten in weiteren nichtanaeroben Zonen führt,
einen ersten Mischer (219) in der ersten Stufe (218) zum Mischen des RAS und ankommenden Abwassers, um eine gemischte Flüssigkeit bereitzustellen,
einen kontinuierlichen Fluss, der konfiguriert ist, um die gemischte Flüssigkeit von der ersten Stufe (215) zu der zweiten Stufe (218) zu transportieren,
einen Fluss (220), der konfiguriert ist, um einer Bodenregion der zweiten Stufe (218) einen zweiten verbleibenden Teil des RAS bereitzustellen, damit sich dieser in der zweiten Stufe mit der gemischten Flüssigkeit mischt,
einen zweiten Mischer (219), der für einen intermittierenden Betrieb fähig ist, in der zweiten Stufe, sodass das Mischen des ankommenden RAS (220) und der gemischten Flüssigkeit von der ersten Stufe (215) intermittierend erfolgt, wodurch, wenn der zweite Mischer (219) aus ist, schwerere Granulatbiomasse dazu tendiert, sich in der zweiten Stufe tiefer abzusetzen als die Flockenbiomasse, sodass der verbleibende Teil (220) von RAS, der in die zweite Stufe eintritt, in innigen Kontakt mit der abgesetzten Granulatbiomasse und partikelförmigem biochemischem Sauerstoffbedarf, BOD, kommt.

14. Abwasserbehandlungssystem gemäß Anspruch 13, wobei die zweite Stufe (218) einen Verteiler (222) umfasst, der den zweiten verbleibenden Teil (220) von RAS in die zweite Stufe einführt, um den ankommenden RAS im Wesentlichen gleichförmig über die Breite der zweiten Stufe und auf der Bodenregion der zweiten Stufe zu verteilen.

15. Abwasserbehandlungssystem gemäß Anspruch 13, wobei die Kläreinheit (184) mit dem Nebenstromabscheider (164) verbunden ist, sodass die Kläreinheit granulatreichen Schlamm in einem Bodenbereich (188) der Kläreinheit konzentriert, wobei mindestens ein Teil (203) des granulatreichen Schlamms als der RAS zu der ersten Stufe (215) der anaeroben Zone (152) zurückgeleitet wird.

## Revendications

1. Un système de traitement des eaux usées incluant une série de zones de processus biologique (152, 154, 156) et un clarificateur (184) en aval des zones de processus, et comprenant en outre :
un écoulement de flux secondaire (160, 162, 166, 164) à partir d'une zone de processus aérobie (156) de la série de zones de processus, configuré en vue de recevoir une portion sélectionnée d'une boue sortant de la zone de processus aérobie, l'écoulement de flux secondaire (160, 162, 166, 164) incluant un séparateur de flux secondaire (164) destiné à séparer une boue granulaire d'une boue floculée pour produire, au moins de manière intermittente, un flux de déchets (186) à partir d'un premier effluent de séparateur (174) contenant une boue essentiellement floculée et pour produire un deuxième effluent (182) à teneur granulaire accrue,
le séparateur de flux secondaire (164) incluant en outre un flux de recyclage (176) configuré en vue de recycler le premier effluent de séparateur (174) en retour vers l'écoulement de flux secondaire (166) rentrant dans le séparateur de flux secondaire (164), avec une commande (168) destinée à commander l'écoulement par l'intermédiaire du flux de recyclage (176), et
le système étant configuré pour réunir le deuxième effluent (182) provenant du séparateur de flux secondaire (164) à un écoulement principal (160) allant de la zone de processus aérobie (156) au clarificateur (184), de façon qu'un écoulement entrant dans le clarificateur (184) soit un écoulement combiné (183) du deuxième effluent (182) avec un écoulement provenant de la zone de processus aérobie, et contienne une proportion accrue de boue granulaire accroissant ainsi la vitesse de sédimentation dans le clarificateur, tendant à recueillir une boue riche en granules dans une aire de fond (188) du clarificateur, grâce à quoi la sédimentation de la boue dans le clarificateur (184) est accrue pour augmenter l'efficacité du clarificateur, et
le système étant configuré pour régler le fonctionnement de l'écoulement de flux secondaire (160, 162, 166, 164) afin d'accroître la maîtrise de la teneur en boue granulaire et en boue floculée dans le flux de processus.

2. Le système de traitement des eaux usées de la revendication 1, dans lequel le clarificateur (184) est configuré pour créer une région riche en flocs (192) séparée de la boue riche en granules présente dans l'aire de fond, et inclut une conduite de recyclage (198) destinée à fournir de la boue floculée de la région riche en flocs (192) du clarificateur à au moins une des zones de processus (152, 154, 156).

3. Le système de traitement des eaux usées de la revendication 2, dans lequel ladite une des zones de processus (156) est ladite zone de processus aérobie ou une zone de processus anoxique (154).

4. Le système de traitement des eaux usées de la revendication 2, incluant un écoulement de recyclage (G-RAS, 203) destiné à fournir de la boue riche en granules provenant du fond (188) du clarificateur à une zone de processus anaérobie (152) de la série de zones de processus biologique, une portion de la boue granulaire sédimentée provenant du clarificateur (184) étant mise au rebut (G-WAS).

5. Le système de traitement des eaux usées de la revendication 1, dans lequel le clarificateur (184) produit un effluent clarifié (EFFLUENT), et le système inclut une conduite de recyclage (201) transportant une portion de l'effluent clarifié jusqu'au séparateur de flux secondaire (164) en vue d'une dilution du flux (166) rentrant dans le séparateur.

6. Le système de traitement des eaux usées de la revendication 1, dans lequel l'écoulement de flux secondaire (162) provenant de la zone de processus aérobie (156) provient d'au-dessus (196) du niveau de l'écoulement principal allant de la zone de processus aérobie au clarificateur.

7. Le système de traitement des eaux usées de la revendication 1, incluant en outre une conduite de recyclage (202, 203, G-RAS) destinée à conduire le deuxième effluent (182) jusqu'à une zone anaérobie (152) de la série de zones de processus.

8. Le système de traitement des eaux usées de la revendication 4, dans lequel le clarificateur (184) inclut un deuxième séparateur (190) positionné à l'intérieur du clarificateur, et dans lequel l'écoulement principal (183) allant de la zone de processus aérobie (156) au clarificateur (184) est raccordé pour s'écouler jusqu'au deuxième séparateur (190), afin de fournir au clarificateur (184) en aval du deuxième séparateur (190) une proportion accrue de boue granulaire, accroissant ainsi davantage la vitesse de sédimentation dans le clarificateur (184), le deuxième séparateur (190) étant efficace pour séparer davantage la boue granulaire de la boue floculée de telle sorte que la boue granulaire se sédimente plus rapidement au fond (188) du clarificateur (184), la boue essentiellement floculée provenant du deuxième séparateur (190) étant dirigée vers une région extérieure (192) du clarificateur (184) de façon à se sédimenter dans une aire externe (192) de boue floculée radialement à l'extérieur de la boue granulaire sédimentée, la conduite de recyclage (198) fournissant de la boue floculée de l'aire externe (192) du clarificateur (184) à au moins une des zones de processus (152, 154, 156).

9. Le système de traitement des eaux usées de la revendication 1, faisant fonction de processus de flux principal destiné à éliminer de l'azote et/ou du phosphore, et incluant de surcroît un deuxième écoulement de flux secondaire comprenant un système incubateur de traitement de flux secondaire destiné à générer de la biomasse granulaire (26a) destinée à être utilisée dans le processus de flux principal, comprenant :
un flux de processus de boue biologique ayant une seule zone ou une succession de zones de processus d'incubateur (38a, 40a, 52a), pour éliminer de l'azote ou de l'azote et du phosphore d'une boue activée, avec un affluent continu d'eau de rejet de traitement de matières solides ou d'eaux usées affluentes (16a) dans les zones de processus d'incubateur, une première zone d'incubateur (38a) desdites zones de processus d'incubateur étant une zone anaérobie ou anoxique,
un séparateur d'incubateur (10d) recevant l'écoulement de boue provenant de la ou des zones de processus d'incubateur de boue biologique, la boue (28a) s'écoulant à travers le séparateur d'incubateur, à l'intérieur duquel la boue granulaire est séparée de la boue floculée, une boue riche en granules (20a) étant recueillie dans une aire de fond du séparateur d'incubateur (10d),
une majorité de la boue riche en granules dans le séparateur d'incubateur (10d) étant recyclée vers la première zone d'incubateur (38a) de façon à alimenter la biomasse granulaire en bCOD soluble affluente, et une portion (26a) de la boue riche en granules étant dirigée vers le processus de flux principal.

10. Le système de traitement des eaux usées de la revendication 9, dans lequel le séparateur d'incubateur (10d) a un déversoir de boue essentiellement floculée (22a), séparé de la boue riche en granules, et incluant un chemin d'écoulement (23a) du déversoir de boue essentiellement floculée vers le processus de flux principal.

11. Le système de traitement des eaux usées de la revendication 10, dans lequel le chemin d'écoulement (23a) du déversoir de boue essentiellement floculée (22a) est dirigé vers le clarificateur (184) du processus de flux principal.

12. Le système de traitement des eaux usées de la revendication 9, dans lequel ladite portion (26a) de la boue riche en granules est dirigée vers une zone anaérobie (152) de la série de zones de processus biologique du processus de flux principal.

13. Le système de traitement des eaux usées de la revendication 1, à écoulement continu d'eaux usées à travers la série de zones de processus biologique (152, 154, 156), une première des zones de processus biologique étant une zone anaérobie (152) destinée à favoriser la croissance sélective de biomasse granulaire, la zone anaérobie comprenant :
au moins deux étages successifs (215, 218, 224) dans la zone anaérobie (152),
incluant un premier étage (215) et un deuxième étage (218),
un écoulement continu d'eaux usées affluentes (150) vers le premier étage (215) de la zone anaérobie,
un recyclage (203, 212) vers l'écoulement continu d'eaux usées affluentes, le recyclage comprenant une première portion d'un flux de boue activée recyclée, RAS, provenant du clarificateur (184) pour produire un écoulement affluent brut/RAS combiné continu (150) rentrant dans le premier étage (215), le premier étage assurant un contact intime entre les eaux usées arrivantes, riches en aliments, et la RAS, riche en activité biologique, de telle sorte que la biomasse granulaire présente dans la RAS soit exposée aux aliments des eaux usées arrivantes en vue de leur consommation et de leur stockage, entraînant la croissance de granules dans des zones non anaérobies supplémentaires,
un premier mélangeur (219) dans le premier étage (218) pour mélanger la RAS et les eaux usées arrivantes afin de fournir une liqueur mixte,
un écoulement continu configuré pour acheminer la liqueur mixte du premier étage (215) au deuxième étage (218),
un écoulement (220) configuré pour fournir une deuxième portion, restante, de la RAS à une région de fond du deuxième étage (218) afin de la mélanger à la liqueur mixte dans le deuxième étage,
un deuxième mélangeur (219) se prêtant à un fonctionnement intermittent dans le deuxième étage de telle sorte que le mélange de la RAS arrivante (220) et de la liqueur mixte provenant du premier étage (215) s'effectue de manière intermittente grâce à quoi, lorsque le deuxième mélangeur (219) est arrêté, la biomasse granulaire plus lourde a tendance à se sédimenter plus profondément que la biomasse floculée dans le deuxième étage, de façon que ladite portion restante (220) de la RAS entrant dans le deuxième étage vienne en contact intime avec la biomasse granulaire sédimentée et la demande biochimique en oxygène, BOD, particulaire.

14. Le système de traitement des eaux usées de la revendication 13, dans lequel le deuxième étage (218) inclut un distributeur (222) introduisant la deuxième portion, restante, (220) de la RAS dans le deuxième étage, pour distribuer la RAS arrivante de manière fondamentalement uniforme sur toute la largeur du deuxième étage et au niveau de ladite région de fond du deuxième étage.

15. Le système de traitement des eaux usées de la revendication 13, dans lequel le clarificateur (184) est raccordé au séparateur de flux secondaire (164) de telle sorte que le clarificateur concentre la boue riche en granules dans une aire de fond (188) du clarificateur, au moins une portion (203) de la boue riche en granules étant dirigée en retour vers le premier étage (215) de la zone anaérobie (152) en tant que ladite RAS.
